Europäisches Patentamt

European Patent Office

Office européen des brevets

(11) Veröffentlichungsnummer: **0 031 863**
**B1**

# EUROPÄISCHE PATENTSCHRIFT

(45) Veröffentlichungstag der Patentschrift: **26.06.85**

(51) Int. Cl.⁴: **F 16 B 5/06**

(21) Anmeldenummer: **80100001.9**

(22) Anmeldetag: **02.01.80**

(54) **Anordnung zum Verbinden von mit Randbereichen aneinander gestellten dünnwandigen Körpern.**

(43) Veröffentlichungstag der Anmeldung:
**15.07.81 Patentblatt 81/28**

(45) Bekanntmachung des Hinweises auf die
Patenterteilung:
**26.06.85 Patentblatt 85/26**

(84) Benannte Vertragsstaaten:
**AT BE CH DE FR GB IT NL SE**

(56) Entgegenhaltungen:
**FR-A- 716 946**
**GB-A- 780 084**
**US-A-2 256 891**
**US-A-3 191 726**
**US-A-3 618 991**
**US-A-3 922 833**

(73) Patentinhaber: **Petz Electro**
**Friesenstrasse 791**
**CH-3185 Schmitten (CH)**

(72) Erfinder: **Petz, Günter**
**Flachslander Strasse 8**
**D-8500 Nürnberg (DE)**

(74) Vertreter: **Göbel, Matthias, Dipl.-Ing.**
**Pruppacher Hauptstrasse 5-7**
**D-8501 Pyrbaum-Pruppach (DE)**

Courier Press, Leamington Spa, England.

Beschreibung

Die Erfindung betrifft eine Anordnung zum Verbinden von mit Randbereichen aneinander gestellten dünnwandigen Körpern mit in den Randbereichen zueinander versetzt im Wechsel angeordneten Anbiegungsabschnitten und Leerabschnitten, bei der die Anbiegungsabschnitte die Leerabschnitte des jeweils anderen Körpers durchgreifen und die Anbiegungsabschnitte der beiden Körper gemeinsam einen zylindrischen Kanal für die steckbare Aufnahme eines die Anbiegungsabschnitte abstützenden stabförmigen Körpers bilden.

Bei einer Verbindungsanordnung (US—A— 3 922 833) der vorgenannten Art sind die Anbiegungsabschnitte und die Leerabschnitte an Flachstreifen angeordnet, die flach an den Körpern befestigt sind. Diese Verbindungsanordnung zeigt den Mangel, daß die Anbiegungsabschnitte nicht zu einem geschlossenen Eckbereich führen. Zwischen den Anbiegungsabschnitten verbleiben vielmehr Trennlinien in der Art eines Scharniers. Eine weitere Verbindungsanordnung (US—A— 2 256 791) hat als Nachteil doppelwandige Körper zur Voraussetzung, was zu einem hohen fertigungstechnischen Aufwand Anlaß gibt und die Verbindung dünnwandiger körper ausschließt.

Es ist Aufgabe der Erfindung unter Vermeidung einer Einsehbarkeit von Trennlinien zwischen den Anbiegungsabschnitten dünnwandige Körper in einfacher Weise zu verbinden.

Nach der Erfindung ist dies dadurch erreicht, daß die Randbereiche der beiden Körper angebogene Randkanten aufweisen und daß die Anbiegungsabschnitte und die Leerabschnitte an den Randkanten angeordnet sind. Die so gebildete Verbindung erfordert lediglich einfache Steckvorgänge und die Randkanten lassen störende Trennlinien zwischen den Anbiegungsabschnitten nicht entstehen. Außerdem eignet sich die Anordnung gleichermaßen zum Verbinden ebener oder gekrümmter dünnwandiger Körper, z.B. Karosserieteile im Kraftfahrzeugbau, im Rohrbau, bei Abdeckungen und Verpackungen von Maschinen oder Aufrichtung beliebiger Gehäuse für Heiz- und Lüftungsgeräte.

Bevorzugt ist der für die Aufnahme des stabförmigen Körpers bestimmte zylindrische Kanal durch Ausdrückungen in den Anbiegungsabschnitten gebildet, wobei die Ausdrückungen mit im wesentlichen halbkreisförmiger Querschnittsform ausgeführt sein können.

Weiter ist vorgesehen, daß die Randkanten beliebig quer, d.h. unter einen Winkel von 90° zum angrenzenden Bereich der Körper eingebogen oder schräg, d.h. unter einem von 90° abweichenden Winkel zum angrenzenden Bereich der Körper sich erstreckend ausgebildet sein können, wodurch wahlweise rechtinkelige bzw. schräge Verbindungen von Körpern herstellbar sind.

Die Anordnung zum Verbinden von Körpern ist nicht auf einen bestimmten Werkstoff der zu verbindenen Körper bzw. eine bestimmte Formgestaltung für diese beschränkt. Es ist auch gleichgültig, ob die Anbiegungsabschnitte angebogen bzw. angeformt sind.

Wie die Erfindung ausgeführt sein kann zeigen mit den für diese wesentlichen Merkmalen die in der Zeichnung dargestellten Ausführungsbeispiele.

Es zeigen:

Fig. 1 einen dünnwandigen Körper perspektivisch,

Fig. 2 einen weiteren dünnwandigen Körper perspektivisch,

Fig. 3 einen stabförmigen Körper perspektivisch,

Fig. 4 einen Schnitt nach der Linie IV—IV der zusammengefügten Fig. 1 bis 3,

Fig. 5 eine Anordnung gemäß anderer Ausführung im Schnitt,

Fig. 6 eine Anordnung gemäß weiterer Ausführung im Schnitt,

Fig. 7 einen Anbiegungsabschnitt mit Einführungsschräge,

Fig. 8 zwei halbschalenförmige Körper durch eine Anordnung verbunden, in Draufsicht,

Fig. 9 gekrümmte Dünnwandige Körper durch eine Anordnung verbunden, perspektivisch,

Fig. 10 zu einem Rohrabschnitt verbundene Körper in Draufsicht,

Fig. 11 durch eine Anordnung verbundene Rohrabschnitte in Seitenansicht und

Fig. 12 einen Rohrabschnitt der Fig. 11 in Draufsicht.

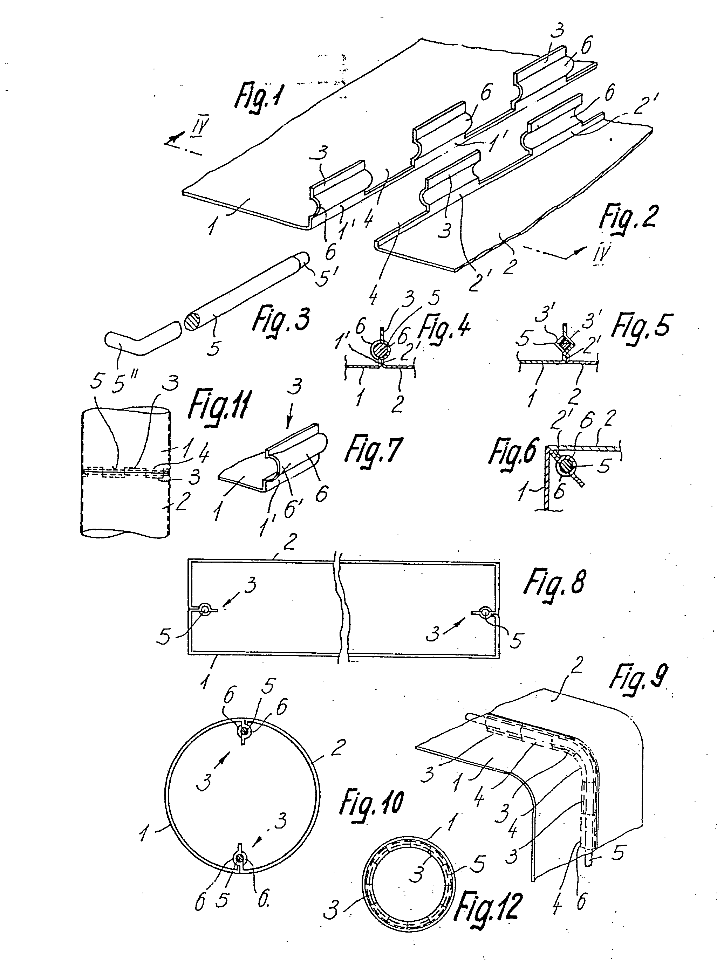

In den Fig. 1 und 2 sind die zu verbindenden dünnwandigen Körper 1 und 2 in gleicher Ebene gestellt. Die beiden Körper 1, 2 weisen im Wechsel versetzt Anbiegungsabschnitte 3 und Leerabschnitte 4 auf. Die Anbiegungsabschnitte 3 durchgreifen beim Aneinanderfügen der Körper 1 und 2 die Leerabschnitte 4 des jeweils anderen Körpers und durch Einstekken eines stabförmigen Körpers 5 (Fig. 3), z.B. ein Drahtstück zwischen den Anbiegungsabschnitten 3 beider Körper 1, 2 und Abstützen der Anbiegungsanschnitte 3 an dem stabförmigen Körper 5, sind die Körper 1, 2 miteinander verbunden. Beim Ausführungsbeispiel ist der stabförmige Körper 5 in kanalförmigen Ausdrückungen 6 der Anbiegungsabschnitte 3 verrastet. Die Ausdrückungen 6 beider Körper 1, 2 bilden gemeinsam einen kreisförmigen Durchlaß (Fig. 4) für den mit entsprechendem Durchmesser und Querschnittsform bzw. -größe ausgeführten stabförmigen Körper 5. Bei der Anordnung der Fig. 5 ist ein stabförmiger Körper 5 mit quadratischer Querschnittsform gezeigt, der mit eckigen Ausdrückungen 3' zur Wirkung bringbar ist.

Die Fig. 7 zeigt einen Anbiegungsabschnitt 3, dessen Ausdrückung 6 in Einsteckrichtung vorne zum erleichterten Einstecken des stabförmigen Körpers 5 eine nach außen angebogene konische Einführunngsschräge 6' aufweist. Es ist möglich zum beiderseitigen erleichterten Einstecken an beiden Enden der Anbiegungsabschnitte 3 Einführungsschrägen 6' vorzusehen. Der Steckvorgang des stabförmigen Körpers 5 läßt sich aber auch dadurch erleichtern, wenn dieser in Einsteckrichtung vorne mit zum freien Ende 5′ konisch abnehmendem Querschnitt ausgeführt ist (Fig. 3).

Die beiden Körper 1, 2 der Fig. 6 sind quer zueinander gestellt und miteinander verbunden. Die Körper 1 und 2 weisen wiederum in Wechsel versetzt Anbiegungsabschnitte 3 und Leerabschnitte 4 auf, die bei aneinandergestellten Körpern eine steckbare Aufnahme für einen stabförmigen Körper 5 bilden. Durch Abstützen der Anbiegungsabschnitte 3 an dem stabförmigen Körper 5 sind die Körper 1, 2 aneinander festgelegt. Bei den Ausführungsbeispielen sind die Anbiegungsabschnitte 3 und die Leerabschnitte 4 an eingebogenen Randkanten 1′ bzw. 2′ der Körper 1, 2 angeordnet, wodurch sich eine geschlossene gemeinsame Trennungsfläche aussen ergibt, die die sonst üblichen Abdeckungen entbehrlich macht.

In Fig. 8 sind die zu verbindenden Körper 1, 2 als Halbschalen eines Lüftergehäuses ausgebildet. Die Halbschalen durchgreifen mit Anbiegungsabschnitten 3 Leerabschnitte 4 und durch Verrasten eines zwischen den Anbiegungsabschnitten 3 eingesteckten stabförmigen Körpers 5 sind die Körper 1, 2 aneinander festgelegt. Bevorzugt kann dabei der stabförmige Körper 5 an seinem rückwärtigen Ende (Fig. 3) eine Abbiegung 5″ aufweisen, die als Anschalg und Handhabe genutzt werden kann. Durch Erfassen der Abbiegung 5″ ist der stabförmige Körper 5 einfach und leicht zwischen den Anbiegungsabschnitten 3 einbringbar oder von dort entfernbar.

In Fig. 9 sind die beiden Körper 1, 2 durch in zwei Ebenen sich erstreckenden Blechformteilen, z.B. Karosserieteilen, gebildet. Anbiegungsabschnitte 3 des einen Körpers durchgreifen Leerabschnitte 4 des anderen Körpers und durch Abstützen der Anbiegungsabschnitte 3 an einem zwischen diesen eingesteckten stabförmigen Körper 5 sind die Körper 1, 2 miteinander verbunden. Bei dergestalt gekrümmten Körpern ist die Anwendung von stabförmigen Körpern 5 aus einem elastischen Werkstoff oder selbst elastisch federnden stabförmigen Körpern notwendig. Die stabförmigen Körper können aus einem metallischen Werkstoff oder einem geeigneten Kunststoff gefertigt sein. Auch besteht die Möglichkeit eine Schraubenfeder als federnd elastischen stabförmigen Körper zu verwenden.

In Fig. 10 sind durch Rohrhalbschalen gebildete Körper 1, 2 gemäß der Anordnung verbunden. An den Körpern 1, 2 vorgesehene Anbiegungsabschnitte 3 sind dazu an in Ausdrückungen 6 derselben geführten stabförmigen Körpern 5 abgestützt.

In den Fig. 11 und 12 sind die zu verbindenden Körper 1, 2 durch Rohrstücke gebildet. Die Rohrstücke weisen an den einander zugewandten Randbereichen zueinander versetzt im Wechsel Anbiegungsabschnitte 3 und Leerabschnitte 4 auf. Die Anbiegungsabschnitte 3 durchgreifen die gegenüberliegenden Leerabschnitte 4 des jeweils anderen Körpers und bewirken durch Abstützen an einen federnd elastischen Körper 5 die Verbindung der Rohrstücke.

**Patentansprüche**

1. Anordnung zum Verbinden von mit Randbereichen aneinander gestellten dünnwandigen Körpern (1, 2) mit in den Randbereichen zueinander versetzt im Wechsel angeordneten Anbiegungsabschnitten (3) und Leerabschnitten (4), bei der die Anbiegungsabschnitte (3) die Leerabschnitte (4) des jeweils anderen Körpers (1, 2) durchgreifen und die Anbiegungsabschnitte (3) der beiden Körper (1, 2) gemeinsam einen zylindrischen Kanal für die steckbare Aufnahme eines die Anbiegungsabschnitte (3) abstützenden stabförmigen Körpers (5) bilden, dadurch gekennzeichnet, daß die Randbereiche der beiden Körper (1, 2) angebogene Randkanten (1′, 2′) aufweisen und daß die Anbiegungsabschnitte (3) und die Leerabschnitte (4) an den Randkanten (1′, 2′) angeordnet sind.

2. Anordnung nach Anspruch 1, dadurch gekennzeichnet, daß die Randkanten (1′, 2′) quer, d.h. unter einem Winkel von 90° zum angrenzenden Bereich der Körper (1, 2) eingebogen sind.

3. Anordnung nach Anspruch 1, dadurch gekennzeichnet, daß die Randkanten (1′, 2′) schräg, d.h. unter einem von 90° abweichendem Winkel zum angrenzenden Bereich der Körper (1, 2) eingebogen sind.

4. Anordnung nach Anspruch 1, dadurch gekennzeichnet, daß der zylindrische Kanal für den stabförmigen Körper (5) durch Ausdrückungen (6) in den Anbiegungsabschnitten (3) gebildet ist und daß die Ausdrückungen (6) mit im wesentlichen halbkreisförmiger Querschnittsform ausgebildet sind.

**Revendications**

1. Dispositif pour l'assemblage de corps (1, 2) à faible épaisseur de paroi, rapprochés dans leur zone de bordure comprenant des languettes repliées (3) disposées décalées alternativement les unes par rapport aux autres et des échancrures (4) dans lesquelles échancrures (4) viennent se loger chaque fois lesdites languettes (3) des corps opposés (1, 2), les languettes repliées (3) desdits corps (1, 2) formant ensemble un canal cylindrique pour le logement d'un corps en forme de fiche (5) embrochable entre les languettes (3) et caractérisés par le fait que les zones de bordure des deux corps (1, 2) présentent des bords en bordure repliés (1′, 2′) et aussi par le fait que les languettes (3) et les échancrures (4) viennent s'appliquer contre les bords repliés (1′, 2′).

2. Dispositif selon revendication 1, caractérisé par le fait que les bords repliés (1′, 2′) sont rabattus perpendiculairement en formant un angle de 90° par rapport à la zone de bordure des corps (1, 2).

3. Dispositif selon revendication 1, caractérisé par le fait que les bords pliés (1', 2') sont rabattus sous un angle s'écartant de l'angle droit (90°), par rapport à la zone de bordure des corps (1, 2).

4. Dispositif selon revendication 1, caractérisé par le fait que le canal cylindrique pour l'introduction du corps en forme de fiche (5) est constitué par des parties refoulées à la presse (6) dans les languettes repliées (3) et que lesdites parties refoulées (6) présentent une section sensiblement semi-circulaire.

**Claims**

1. Arrangement for joining thin-walled bodies (1, 2) with their edges positioned against one another, with alternate, corresponding bent-up sections (3) and blank sections (4) located along the edges, where the bent-up sections (3) project through the blank sections (4) of the other body in each case (1, 2), and the bent-up sections (3) of the two bodies (1, 2) combine to form a cylindrical channel for insertion and location of a rod-shaped body (5) supporting the bent-up sections (3), characterized by the fact that the edges of the two bodies (1, 2) have raised rims (1', 2') and that the bent-up sections (3) and the blank sections (4) are located along the raised rims (1', 2').

2. Arrangement in accordance with claim 1, characterized by the fact that the raised rims (1', 2') are formed at a right angle, i.e. at an angle of 90° to the adjacent area of bodies (1, 2).

3. Arrangement in accordance with claim 1, characterized by the fact that the raised rims (1', 2') are formed obliquely, i.e. at an angle deviating from 90° to the adjacent area of bodies (1, 2).

4. Arrangement in accordance with claim 1, characterized by the fact that the cylindrical channel for the rod-shaped body (5) is formed by pressed-out curvature (6) in the bent-up sections (3) and that the pressed-out curvatures (6) are of basically semi-circular cross-section.